# EUROPEAN PATENT SPECIFICATION

(11) **EP 0 550 940 B1**
(45) Date of publication and mention of the grant of the patent: **11.10.1995**
(21) Application number: 92300093.9
(22) Date of filing: 07.01.1992
(51) Int. Cl.: B62B 1/12, A47C 13/00

(54) **Multi-function chair**
Mehrzweckstuhl
Chaise à fontions multiples

(43) Date of publication of application: 14.07.1993
(73) Proprietor: Chang, Chien-I, Hou-Hu, Chia-Yi City (TW)
(72) Inventor: Chang, Chien-I, Hou-Hu, Chia-Yi City (TW)
(74) Representative: Abbie, Andrew Kenneth

(56) References cited:
- US-A- 2 809 047
- US-A- 5 062 650

## Description

This invention relates to a multi-function chair.

US-A-5062650 discloses a multi-function chair comprising:
a seat having wheels mounted adjacent a back end thereof;
a back frame shaped as an inverted U;
a seat frame comprising two parallel members each of which is secured at the back end thereof to a respective downwardly extending arm of said back frame by a respective bracket; and
a fore leg frame and a hind leg frame, each being U-shaped having two arms and a closed end portion;
said parallel members of said seat frame having respective joints provided at the front ends thereof pivotably connecting said seat frame with said hind leg frame;
said fore leg frame having a lateral connecting rod interconnecting end portions of the arms thereof remote from the closed end portion thereof;
said fore leg frame and said hind leg frame being pivotably interconnected such that in a chair mode said fore leg frame and said hind leg frame intercross and said closed end portion of said fore leg frame engages an engaging means of said seat and in a trolley mode said closed end portion of said fore leg frame is disengaged from said engaging means and said fore leg frame and said hind leg frame lie in substantially the same plane and extend from the front of said seat in substantially the same plane as said seat.

An object of the present invention is to provide such a multi-function chair characterised in that each of said parallel members of said seat frame comprises a rod or a tube and said seat comprises downwardly projecting walls defining respective smaller, upper recesses for engaging with a lateral rod of said seat frame extending between said parallel members near respective front ends thereof and respective larger, lower recesses communicating with said upper recesses for engaging with said lateral connecting rod of said fore leg frame when said multi-function chair is in said trolley mode.

Preferably, each joint is fixed to a respective one of said parallel members and has an L-shaped slot receiving a pin passing through a hole in a respective arm of said hind leg frame.

Said back frame preferably has holes at the free end portions of its downwardly extending arms through which a shaft rod mounting said wheels passes.

Preferably, each bracket is secured to a respective downwardly extending arm of said back frame with a pin or rivet extending through aligned holes of said bracket and arm; said brackets are secured to said parallel members of said seat frame by a rod passing through aligned holes in said brackets and parallel members; and said brackets are provided with block walls for engaging the free end portions of the downwardly extending arms of said back frame for supporting said back frame in an upright position when said multi-function chair is in said chair mode.

In order that the invention may be well understood, an embodiment thereof, which is given by way of example only, will now be described with reference to the accompanying drawings, in which:

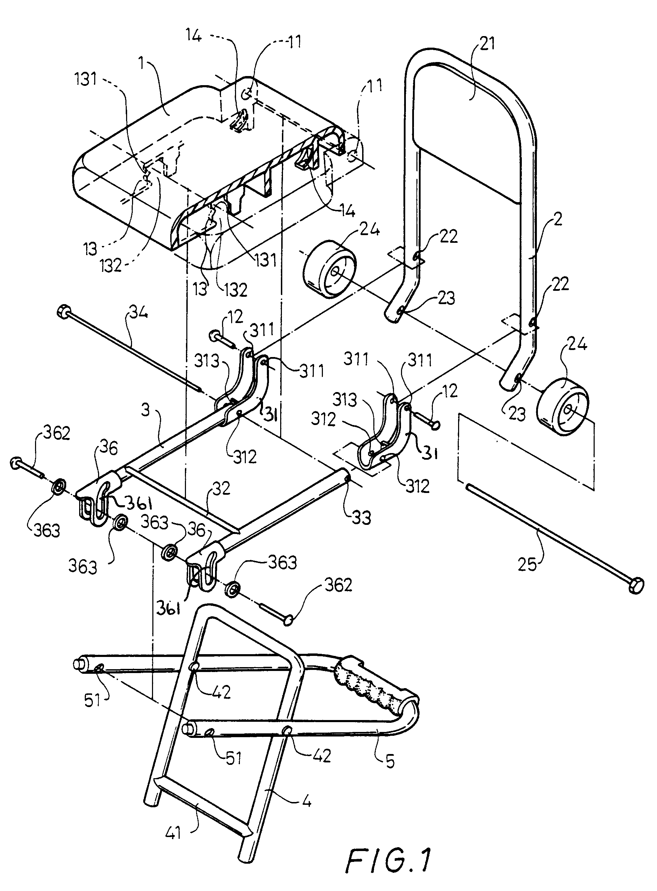

Figure 1 is an exploded perspective view of a multi-function chair;
Figure 2 is a side view of a multi-function chair in a chair mode;
Figure 3 is a side view of the multi-function chair in an intermediate condition between the chair mode and a trolley mode; and
Figure 4 is a side view of the multi-function chair in the trolley mode.

Referring to the drawings, there is shown a multi-function chair which comprises a seat 1, a back frame 2, a seat frame 3, a fore leg frame 4 and a hind leg frame 5 as its main components.

The seat 1 has two holes 11 in opposite sides of the back end portion thereof for a rod 34 which secures the back frame 2 and two brackets 31 with the seat 1. Two downwardly projecting walls 13 of the seat at the front end portion thereof define smaller upper recesses 131 communicating with larger, lower recesses 132. A lateral rod 32 of the seat frame 3 fits in the smaller upper recesses 131 in both the chair mode and the trolley mode and a lateral connecting rod 41 of the fore leg frame 4 fits in the larger lower recesses 132 in the trolley mode. The underside of the seat 1 is provided with engaging means 14 near its back end for engaging the top closed end portion of the fore leg frame 4 when the fore leg frame 4 and the hind leg frame 5 intercross at a right angle to support the seat 1 in the chair mode.

The back frame 2 is shaped as an inverted U to support a back rest 21 at an upper portion thereof. This frame 2 has two parallel downwardly extending arms formed by tubes. These arms are provided with two holes 22 near their longitudinal centers for rivets or pins 12 which secure the brackets 31 to the arms. Two holes 23 are provided at the free end portions of the downwardly extending arms of the back frame 2 through which passes a shaft rod 25 rotatably mounting wheels 24 to the back frame.

The seat frame 3 has two parallel members comprising tubes or rods fixed together with the lateral rod 32. The rear ends of the parallel members have holes 33 for a rod 34 which secures the two brackets 31 with the seat frame 3 by riveting.

The two brackets 31 have lower holes 312 for passage of the rod 34, and upper holes 311 for passage of the pins or rivets 12 which secure the brackets 31 with the back frame 2. The brackets 31 also have block walls 313 for engaging the free end portions of the downwardly extending arms of the back frame 2 for supporting the back frame in an upright position in the chair mode. The front ends of the parallel members of the seat frame 3 are pivotably connected with the upper ends of the hind leg frame by respective joints 36. Each joint has an L-shaped slot 361 receiving a pin 362 which also passes through a hole 51 in the hind leg frame 5. The pin is secured for sliding in the slot by nuts 363.

The fore leg frame 4 and the hind leg frame 5 are each U-shaped, having two arms and a closed end portion. The above-mentioned lateral connecting rod 41 is secured between end portions of the arms of the frame 4 remote from the closed end portion of the frame 4. Two corners of the frame 4 at the closed end portion thereof engage with the engaging means 14 in the seat 1 in the chair mode. Rivets or bolts 42 pivotably interconnect the fore leg frame 4 with the hind leg frame 5 near the longitudinal centers thereof. The holes 51 through which the pins 362 pass are provided at the free end portions of the arms of the hind leg frame 5.

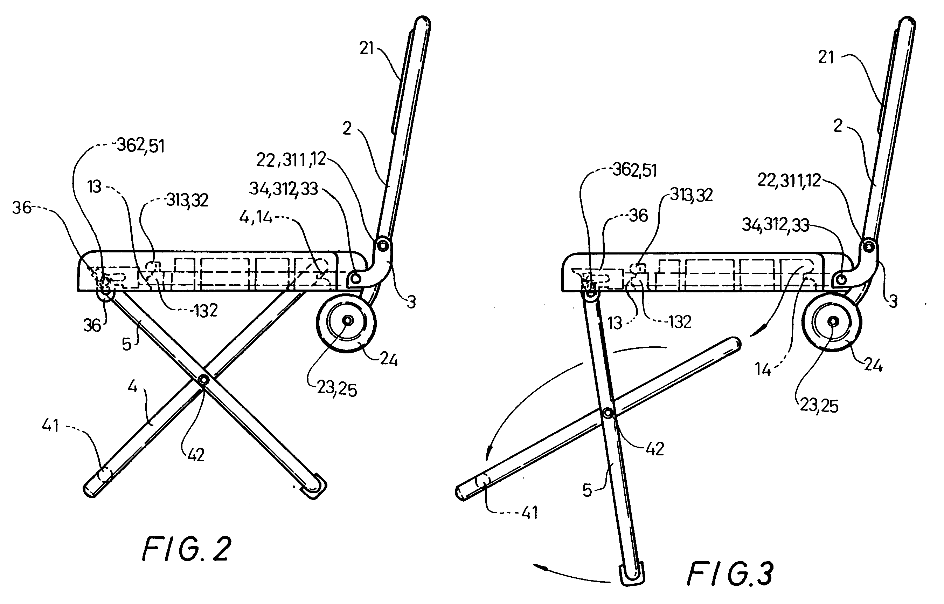

Figure 2 shows the multi-function chair in the chair mode wherein the back frame 2 is supported by the block walls 313 of the brackets 31, the pins 362 are positioned in curved corners of the L-shaped slots 361, the fore leg frame 4 and the hind leg frame 5 intercross at a right angle, and the fore leg frame 4 engages the engaging means 14.

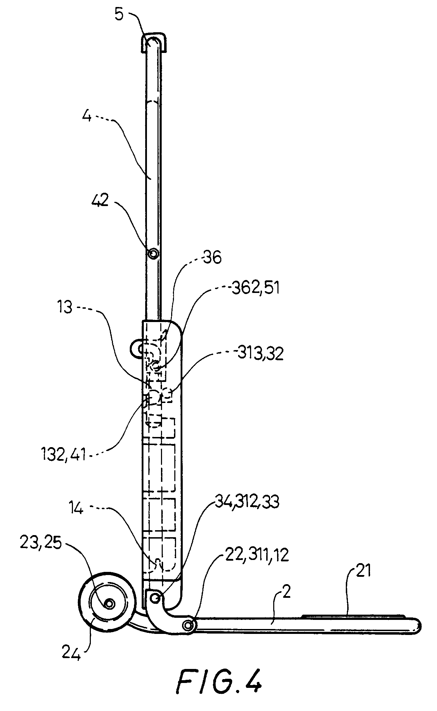

Figure 3 shows the chair in an intermediate condition between the chair mode and the trolley mode. To reach this condition the interconnected back frame 2 and seat 1 are lifted allowing the fore leg frame 4 to separate from the engaging means 14 of the seat 1 and causing the pins 362 to be moved to the lower extremities of the L-shaped slots 361. The fore leg frame 4 and the hind leg frame 5 are then folded together. When the frames 4 and 5 lie in the same plane they are rotated to the front of the seat 1 until the lateral rod 41 of the fore leg frame 4 engages the lower recesses 132 of the walls 13 as shown in Fig. 4. On such engagement, the hind leg frame 5 and the seat frame 3 are secured together and extend from the front of the seat in substantially the same plane as the seat, and the multi-function chair is in its trolley mode and may be moved on its wheels 24.

## Claims

1. A multi-function chair comprising:
a seat (1) having wheels (24) mounted adjacent a back end thereof;
a back frame (2) shaped as an inverted U;
a seat frame (3) comprising two parallel members each of which is secured at the back end thereof to a respective downwardly extending arm of said back frame (2) by a respective bracket (31); and
a fore leg frame (4) and a hind leg frame (5), each being U-shaped having two arms and a closed end portion;
said parallel members of said seat frame (3) having respective joints (36) provided at the front ends thereof pivotably connecting said seat frame (3) with said hind leg frame (5);
said fore leg frame having a lateral connecting rod (41) interconnecting end portions of the arms thereof remote from the closed end portion thereof;
said fore leg frame (4) and said hind leg frame (5) being pivotably interconnected such that in a chair mode said fore leg frame (4) and said hind leg frame (5) intercross and said closed end portion of said fore leg frame engages an engaging means (14) of said seat and in a trolley mode said closed end portion of said fore leg frame is disengaged from said engaging means (14) and said fore leg frame and said hind leg frame lie in substantially the same plane and extend from the front of said seat (1) in substantially the same plane as said seat; characterised in that each of said parallel members of said seat frame (3) comprises a rod or a tube and said seat (1) comprises downwardly projecting walls (13) defining respective smaller, upper recesses (131) for engaging with a lateral rod (32) of said seat frame (3) extending between said parallel members near respective front ends thereof and respective larger, lower recesses (132) communicating with said upper recesses for engaging with said lateral connecting rod (41) of said fore leg frame when said multi-function chair is in said trolley mode.

2. A multi-function chair as claimed in claim 1, wherein each joint (36) is fixed to a respective one of said parallel members and has an L-shaped slot (361) receiving a pin (362) passing through a hole (51) in a respective arm of said hind leg frame (5).

3. A multi-function chair as claimed in claim 1 or 2, wherein said back frame (2) has holes (23) at the free end portions of its downwardly extending arms through which a shaft rod (25) mounting said wheels (24) passes.

4. A multi-function chair as claimed in claim 1, 2 or 3, wherein each bracket (31) is secured to a respective downwardly extending arm of said back frame (2) with a pin or rivet (12) extending through aligned holes (311 and 22) of said bracket and arm; said brackets (31) are secured to said parallel members of said seat frame (3) by a rod (34) passing through aligned holes (312 and 33) in said brackets and parallel members; and said brackets (31) are provided with block walls (313) for engaging the free end portions of the downwardly extending arms of said back frame (2) for supporting said back frame in an upright position when said multi-function chair is in said chair mode.

## Patentansprüche

1. Mehrzweckstuhl, der aufweist:
einen Sitz (1) mit Rädern (24), die an sein hinteres Ende angrenzend montiert sind,
eine hinteren Rahmen (2) in Form eines umgedrehten U,
einen Sitzrahmen (3), der zwei parallele Elemente aufweist, von denen jedes an seinem hinteren Ende durch eine jeweilige Halterung (31) an einem jeweiligen sich nach unten erstreckenden Schenkel des hinteren Rahmens (2) befestigt ist, und
einen Vorderbeinrahmen (4) und einen Hinterbeinrahmen (5), von denen jeder U-förmig ist und zwei Schenkel und einen verbundenen Endabschnitt aufweist,
wobei die parallelen Elemente des Sitzrahmens (3) jeweilige Gelenkstücke (36) aufweisen, die an ihren vorderen Enden vorgesehen sind und den Sitzrahmen (3) mit dem Hinterbeinrahmen (5) drehbar verbinden,
wobei der Vorderbeinrahmen einen Querverbindungsstab (41) aufweist, der Endabschnitte seiner Schenkel entfernt von seinem verbundenen Endabschnitt miteinander verbindet,
wobei der Vorderbeinrahmen (4) und der Hinterbeinrahmen (5) drehbar miteinander verbunden sind, so daß in einem Stuhlmodus sich der Vorderbeinrahmen (4) und der Hinterbeinrahmen (5) kreuzen und der verbundene Endabschnitt des Vorderbeinrahmens mit einer Eingriffseinrichtung (14) des Sitzes in Eingriff steht und in einem Wagenmodus der verbundene Endabschnitt des Vorderbeinrahmens mit der Eingriffseinrichtung (14) außer Eingriff steht und der Vorderbeinrahmen und der Hinterbeinrahmen in im wesentlichen der gleichen Ebene liegen und sich von der vorderen Seite des Sitzes (1) in im wesentlichen der gleichen Ebene wie der Sitz erstrecken,
dadurch gekennzeichnet daß, jedes der parallelen Elemente des Sitzrahmens (3) einen Stab oder ein Rohr aufweist und der Sitz (1) nach unten vorstehende Wände (13) aufweist, die jeweilige kleinere obere Aussparungen (131) zum Eingriff mit einem Querstab (32) des Sitzrahmens (3), der sich zwischen den parallelen Elementen nahe ihren jeweiligen vorderen Enden erstreckt, und jeweilige größere untere Aussparungen (132) definieren, die mit den oberen Aussparungen in Verbindung stehen, damit diese mit dem Querverbindungsstab (41) des Vorderbeinrahmens in Eingriff stehen, wenn sich der Mehrzweckstuhl im Wagenmodus befindet.

2. Mehrzweckstuhl nach Anspruch 1, bei dem jedes Gelenkstück (36) an einem jeweiligen der parallelen Elemente befestigt ist und einen L-förmigen Schlitz (361) aufweist, der einen Stift (362) aufnimmt, der in einem Loch (51) in einem jeweiligen Schenkel des Hinterbeinrahmens (5) verläuft.

3. Mehrzweckstuhl nach Anspruch 1 oder 2, bei dem der hintere Rahmen (2) an den freien Endabschnitten seiner sich nach unten erstreckenden Schenkel Löcher (23) aufweist, durch die ein Wellenstab (25), an dem die Räder (24) montiert sind, verläuft.

4. Mehrzweckstuhl nach Anspruch 1, 2 oder 3, bei dem jede Halterung (31) an einem jeweiligen sich nach unten erstreckenden Schenkel des hinteren Rahmens (2) mit einem Stift oder Niet (12) befestigt ist, der sich durch ausgerichtete Löcher (311 und 22) der Halterung und des Rahmens erstreckt, bei dem die Halterungen (31) an den parallelen Elementen des Sitzrahmens (3) durch einen Stab (34) befestigt sind, der durch ausgerichtete Löcher (312 und 33) in den Halterungen und parallelen Elementen verläuft, und bei dem die Halterungen (31) mit Blockierwänden (313) versehen sind, damit diese mit den freien Endabschnitten der sich nach unten erstreckenden Schenkel des hinteren Rahmens (2) in Eingriff stehen, um den hinteren Rahmen in einer aufrechten Position zu stützen, wenn sich der Mehrzweckstuhl im Stuhlmodus befindet.

## Revendications

1. Chaise à fonctions multiples comprenant :
un siège (1) ayant des roues (24) montées au voisinage de son extrémité arrière ;
un châssis de dossier (2) en forme de U inversé ;
un châssis de siège (3) comprenant deux éléments parallèles fixés chacun au niveau de son extrémité arrière, sur le bras correspondant qui s'étend vers le bas dudit châssis de dossier (2), par un support correspondant (31) ; et
un châssis formant pieds avant (4) et un châssis formant pieds arrière (5) ayant chacun une forme en U et comportant chacun deux bras et une partie d'extrémité fermée ;
lesdits éléments parallèles dudit châssis de siège (3) comportant des articulations respectives (36) situées au niveau de leurs extrémités avant et reliant à pivotement ledit châssis de siège (3) audit châssis formant pieds arrière (5) ;
ledit châssis formant pieds avant comportant une tige de liaison latérale (41) reliant entre elles les parties d'extrémité de ses bras qui sont éloignées de sa partie d'extrémité fermée ;
ledit châssis formant pieds avant (4) et ledit châssis formant pieds arrière (5) étant reliés entre eux de manière à pouvoir pivoter de telle sorte que, dans un mode chaise, ledit châssis formant pieds avant (4) et ledit châssis formant pieds arrière (5) se croisent et ladite partie d'extrémité fermée dudit châssis formant pieds avant vienne en prise avec un moyen de retenue (14) dudit siège, et que dans un mode chariot, ladite partie d'extrémité fermée dudit châssis formant pieds avant est dégagée dudit moyen de retenue (14) et ledit châssis formant pieds avant et ledit châssis formant pieds arrière se trouvent dans pratiquement le même plan et s'étendent depuis l'avant dudit siège (1) dans pratiquement le même plan que ledit siège ; caractérisée en ce que chacun desdits éléments parallèles dudit châssis de siège (3) comprend une tige ou un tube, et ledit siège (1) comprend des parois (13) faisant saillie vers le bas et définissant des encoches supérieures plus petites respectives (131) pour venir en prise avec la tige latérale (32) dudit châssis de siège (3) qui s'étend entre lesdits éléments parallèles, près de leurs extrémités avant respectives, et des encoches inférieures plus grandes respectives (132) communiquant avec lesdites encoches supérieures pour venir en prise avec ladite tige de liaison latérale (41) dudit chassis formant pieds avant lorsque ladite chaise à fonctions multiples est dans le mode chariot.

2. Chaise à fonctions multiples selon la revendication 1, dans laquelle chaque articulation (36) est fixée à l'élément correspondant desdits éléments parallèles et comporte une fente en forme de L (361) recevant une broche (362) traversant un trou (51) ménagé dans le bras correspondant dudit châssis formant pieds arrière (5).

3. Chaise à fonctions multiples selon la revendication 1 ou 2, dans laquelle ledit châssis de dossier (2) comporte, au niveau des parties d'extrémité libre de ses bras qui s'étendent vers le bas, des trous (23) à travers lesquels passe un arbre (25) de montage desdites roues (24).

4. Chaise à fonctions multiples selon la revendication 1, 2 ou 3, dans laquelle chaque support (31) est fixé au bras correspondant, qui s'étend vers le bas, dudit châssis de dossier (2), par une broche ou un rivet (12) traversant des trous alignés (311 et 22) dudit support et dudit bras ; lesdits supports (31) sont fixés auxdits éléments parallèles dudit châssis de siège (3) par une tige (34) traversant des trous alignés (312 et 33) ménagés dans lesdits supports et lesdits éléments parallèles ; et lesdits supports (31) sont pourvus de parois de verrouillage (313) destinées à venir en prise avec les parties d'extrémité libre des bras, qui s'étendent vers le bas, dudit châssis de dossier (2), pour supporter ledit chassis de dossier dans une position verticale lorsque ladite chaise à fonctions multiples est dans ledit mode chaise.
